# EUROPEAN PATENT APPLICATION

(11) **EP 4 692 580 A1**
(43) Date of publication of application: **11.02.2026**
(21) Application number: 25754114.4
(22) Date of filing: 13.02.2025
(51) Int. Cl.: F16C 33/64, B60B 35/14, F16C 19/16, F16C 43/04

(54) **CAULKING ASSEMBLY MANUFACTURING METHOD, HUB UNIT BEARING MANUFACTURING METHOD, VEHICLE MANUFACTURING METHOD, MACHINE MANUFACTURING METHOD, VEHICLE MANUFACTURING EQUIPMENT, MACHINE MANUFACTURING EQUIPMENT, MACHINE, AND VEHICLE**

(30) Priority: 12.06.2024 JP 2024094964
(71) Applicant: NSK Ltd., Tokyo 141-8560 (JP)
(72) Inventor: NAKAMURA Seiji, Fujisawa-shi, Kanagawa 251-8501 (JP); MIZUSHIMA Yuuki, Fujisawa-shi, Kanagawa 251-8501 (JP)
(74) Representative: Grünecker Patent- und Rechtsanwälte PartG mbB
(86) International application number: PCT/JP2025/004776
(87) International publication number: WO 2025/258128

(57) **Abstract**

Formation of a face spline includes pressing a pressing die (39) against a staked portion (19a) according to first relative movement between the pressing die (39) and the staked portion (19a) around a reference axis (C), and pressing the pressing die (39) against the staked portion (19a) according to second relative movement between the pressing die (39) and the staked portion (19a) around the reference axis (C). A partial processing position on the staked portion (19a) is moved in a first circumferential direction in the first relative movement. A partial processing position on the staked portion (19a) is moved in a second circumferential direction opposite to the first circumferential direction in the second relative movement.

## Description

### TECHNICAL FIELD

The present disclosure relates to a method of manufacturing a staked assembly, a method of manufacturing a hub unit bearing, a method of manufacturing a vehicle, a method of manufacturing a mechanical device, an apparatus for manufacturing a vehicle, an apparatus for manufacturing a mechanical device, a mechanical device, and a vehicle.

Priority is claimed on Japanese Patent Application No. 2024-094964, filed June 12, 2024, the content of which is incorporated herein by reference.

### BACKGROUND ART

In order to support a driving wheel with respect to an independent suspension and rotate and drive the driving wheel, a wheel driving unit is used. The wheel driving unit is constituted by a hub unit bearing and a constant velocity joint (CVJ) combined by a coupling member.

The hub unit bearing includes an outer ring, a hub, and a plurality of rolling elements, and rotatably supports the driving wheel with respect to a suspension system.

The outer ring has a plurality of rows of outer ring raceways on an inner circumferential surface, and supports and fixes the outer ring raceways with respect to the suspension system.

The hub has a plurality of rows of inner ring raceways on an outer circumferential surface, and has a hub-side face spline with recessed portions and protruding portions disposed alternately in a circumferential direction on an inner end surface in an axial direction. The wheel is coupled and fixed to the hub.

The hub includes an inner ring and a hub wheel. The inner ring includes an intermediate portion of the hub wheel in an axial direction on an end surface on an outer side in the axial direction (an outer side of a vehicle body in a widthwise direction in a state in which the hub unit bearing is assembled to an automobile), and is fitted onto a fitting shaft portion provided in a portion of the hub wheel on an inner side in the axial direction (an inner side of the vehicle body in the widthwise direction in a state in which the hub unit bearing is assembled to the automobile) while abutting a step surface directed inward in the axial direction without rattling. In this state, a cylindrical portion of the fitting shaft portion, which protrudes further inward in the axial direction than the inner end surface of the inner ring in the axial direction, is plastically deformed outward in the radial direction to form a staked portion, which presses down on the inner end surface of the inner ring in the axial direction. Accordingly, the inner ring and the hub wheel are fixed together, and a preload is applied to the rolling elements. The hub-side face spline is formed on an inner end surface of the staked portion in the axial direction.

The rolling elements are disposed, multiple thereof for each row, between plural rows of outer ring raceways and plural rows of inner ring raceways.

The constant velocity joint includes a joint outer ring, a joint inner ring, and a plurality of balls, and transmits a rotation torque of the driving shaft to the hub.

The joint outer ring has a joint-side face spline that engages with the hub-side face spline on an outer side surface in the axial direction, and outer diameter-side engagement grooves provided at a plurality of places on an inner circumferential surface in the circumferential direction and extending in the axial direction.

The joint inner ring has inner diameter-side engagement grooves provided at a plurality of places on an outer circumferential surface in the circumferential direction and extending in the axial direction, and is fitted onto the driving shaft.

The plurality of balls are disposed between the outer diameter-side engagement grooves and the inner diameter-side engagement grooves.

The coupling member is constituted by a bolt or the like, and couples the hub and the joint outer ring.

When the joint inner ring rotates with the rotation of the driving shaft, the rotation of the joint inner ring is transmitted to the joint outer ring via a plurality of balls. Then, the rotation of the joint outer ring is transmitted to the hub through the engagement portion between the joint-side face spline and the hub-side face spline, thereby rotating and driving the driving wheel, which is supported on and fixed to the hub.

Japanese Patent Application, Publication No. 2017-013079 discloses a face spline forming method of forming a hub-side face spline through rotary forging by forming a staked portion configured to couple a hub wheel and an inner ring, pressing a tooth profile (processing part) of a punch (pressing die) rotatably supported about a central axis inclined with respect to a reference axis disposed coaxially with a central axis of the hub wheel against an inner end surface of the staked portion in an axial direction, rotating and driving the pressing die about the reference axis in one direction, and plastically deforming an inner end surface of the staked portion in the axial direction.

### Citation List

### Patent Document

Patent Document 1: Japanese Patent Application, Publication No. 2017-013079

### SUMMARY OF INVENTION

### Technical Problem

In the method disclosed in Japanese Patent Application, Publication No. 2017-013079, stress concentration occurs on a base portion of a side surface on a front side of a pressing die in a rotation direction. This is likely to lead to an increase in manufacturing costs.

The present disclosure is directed to providing a manufacturing method and a manufacturing apparatus, which are advantageous in reduction in manufacturing costs, and/or improvement in product quality.

### Solution to Problem

A method of manufacturing a staked assembly according to an aspect of the present invention includes a process of preparing a first member having a staked portion and fixing a second member to the first member in an axial direction using the staked portion, a process of setting a pressing die for a face spline and disposing the pressing die by inclining a central axis thereof with respect to a reference axis, and a process of forming a face spline on the staked portion of the first member using the pressing die. Formation of the face spline includes a process of pressing the pressing die against the staked portion according to first relative movement between the pressing die and the staked portion such that, in the first relative movement, a partial processing position on the staked portion is moved in a first circumferential direction, and a process of pressing the pressing die against the staked portion according to second relative movement between the pressing die and the staked portion such that, in the second relative movement, a partial processing position on the staked portion is moved in a second circumferential direction opposite to the first circumferential direction.

In another aspect of the present invention, the method of manufacturing the mechanical device includes manufacturing the staked assembly using the manufacturing method, and assembling the staked assembly to a device body.

In another aspect of the present invention, a method of manufacturing a hub unit bearing includes a process of setting a pressing die for a face spline and disposing the pressing die by inclining a central axis thereof with respect to a reference axis, and a process of forming a face spline on a hub body, to which rolling elements and an outer ring are attached, using the pressing die. Formation of the face spline includes a process of pressing the pressing die against the hub body according to first relative movement between the pressing die and the hub body such that, in the first relative movement, a partial processing position on the hub body is moved in a first circumferential direction, and a process of pressing the pressing die against the hub body according to second relative movement between the pressing die and the hub body such that, in the second relative movement, a partial processing position on the hub body is moved in a second circumferential direction opposite to the first circumferential direction.

In another aspect of the present invention, the method of manufacturing the hub unit bearing includes manufacturing the hub unit bearing using the manufacturing method, and assembling the hub unit bearing to a vehicle body.

In another aspect of the present invention, an apparatus for manufacturing a staked assembly includes a first mechanism configured to support a first member having a staked portion with a second member fixed to the first member in an axial direction by the staked portion, a second mechanism configured to support a pressing die for a face spline with a central axis of the pressing die inclined with respect to a reference axis, a third mechanism configured to press the pressing die against the staked portion according to relative movement between the pressing die and the staked portion, and a control device. The control device has a first mode of executing first relative movement between the pressing die and the staked portion such that, in the first relative movement, a partial processing position on the staked portion is moved in a first circumferential direction, and a second mode of executing second relative movement between the pressing die and the staked portion such that, in the second relative movement, a partial processing position on the staked portion is moved in a second circumferential direction opposite to the first circumferential direction.

In another aspect of the present invention, a mechanical device includes the staked assembly manufactured using the manufacturing apparatus, and a device body to which the staked assembly is assembled.

In another aspect of the present invention, an apparatus for manufacturing a hub unit bearing includes a first mechanism configured to support a hub body to which rolling elements and an outer ring are attached, a second mechanism configured to support a pressing die for a face spline with a central axis of the pressing die inclined with respect to a reference axis, a third mechanism configured to press the pressing die against the hub body according to relative movement between the pressing die and the hub body, and a control device. The control device has a first mode of executing first relative movement between the pressing die and the hub body such that, in the first relative movement, a partial processing position on the hub body is moved in a first circumferential direction, and a second mode of executing second relative movement between the pressing die and the hub body such that, in the first relative movement, a partial processing position on the hub body is moved in a second circumferential direction opposite to the first circumferential direction.

**In** another aspect of the present invention, a vehicle includes the hub unit bearing manufactured using the manufacturing apparatus, and a vehicle body to which the hub unit bearing is assembled.

### Advantageous Effects of Invention

According to the aspect of the present invention, it is advantageous in reduction in manufacturing costs, and/or improvement in product quality.

### BRIEF DESCRIPTION OF DRAWINGS

[FIG. 1] FIG. 1 is a cross-sectional view showing an example of a wheel driving unit including a hub unit bearing.
[FIG. 2] FIG. 2 is a cross-sectional view showing a state before and after forming a staked portion in a process of manufacturing the hub unit bearing.
[FIG. 3] FIG. 3 is a cross-sectional view schematically showing a face spline forming apparatus, showing a state upon start of a face spline forming process.
[FIG. 4] FIG.4 is a view showing a state upon completion of the face spline forming process, corresponding to an upper portion of FIG. 3.
[FIG. 5] FIG. 5 is a cross-sectional view showing a part of a face spline forming apparatus.
[FIG. 6] FIG. 6 is a block diagram showing face spline forming in sequence of processes.
[FIG. 7] FIG. 7 is a schematic view showing a state in which the hub-side face spline is formed, corresponding to an X-X cross section in FIG. 4.
[FIG. 8] FIG. 8 is a schematic view showing a state in which the hub-side face spline is formed by a method in the related art.
[FIG. 9] FIG. 9 is a schematic view showing a vehicle including a hub unit bearing.
[FIG. 10] FIG. 10 is a partial schematic view showing the vehicle including the hub unit bearing.

### DESCRIPTION OF EMBODIMENTS

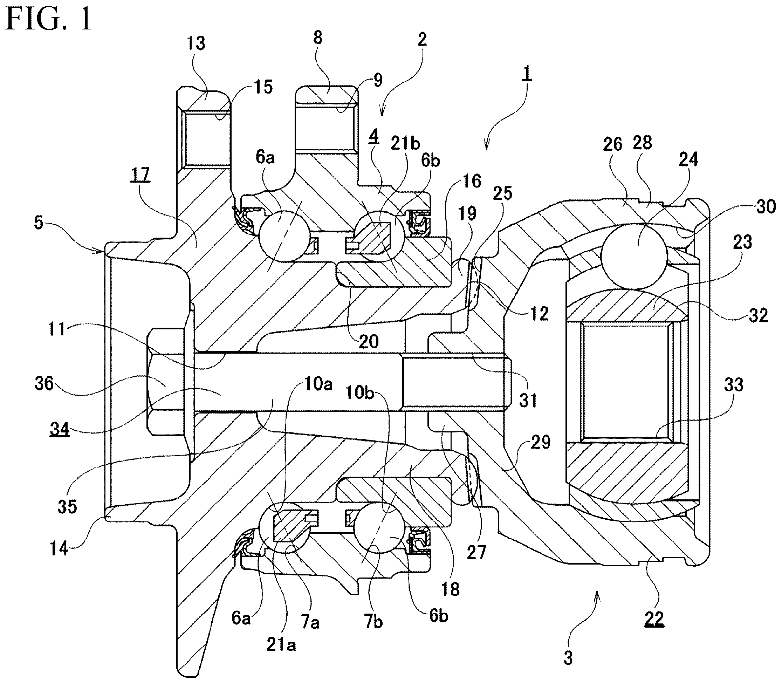

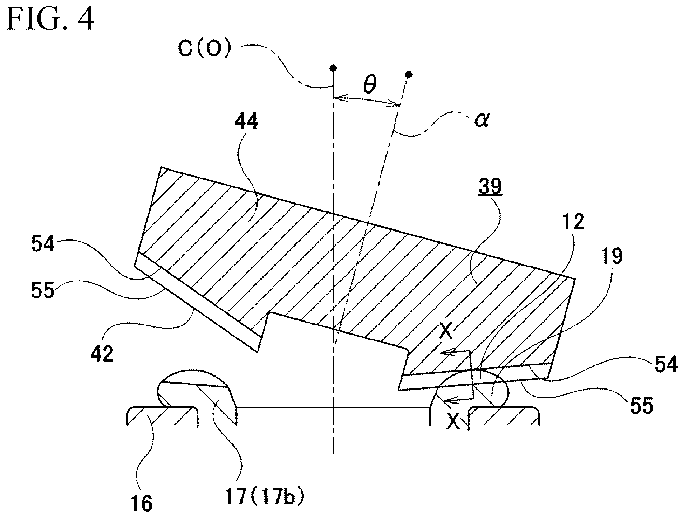

A first embodiment will be described with reference to FIG. 1 to FIG. 7.

A manufacturing method and a manufacturing apparatus of an aspect of the present disclosure can be widely applied to a vehicle and a mechanical device including parts having face splines, or manufacture of these components.

In an embodiment, the manufacturing method and the manufacturing apparatus of the aspect of the present disclosure are applied to manufacture of a hub unit bearing that constitute the vehicle.

### [Structure of wheel driving unit]

FIG. 1 shows a wheel driving unit 1. The wheel driving unit 1 is configured to include a hub unit bearing (staked assembly (crimped assembly)) 2, and a constant velocity joint 3.

In the following description, an axial direction, a radial direction and a circumferential direction related to the wheel driving unit 1 are not particularly limited, and referred to as an axial direction, a radial direction and a circumferential direction of a hub 5 of the hub unit bearing 2. The axial direction, the radial direction and the circumferential direction of the hub 5 coincide with an axial direction, a radial direction and a circumferential direction of an outer ring 4 of the hub unit bearing 2, and coincide with an axial direction, a radial direction and a circumferential direction of the constant velocity joint 3. In addition, the outer side in the axial direction is referred to as an outer side of a vehicle body in a widthwise direction in a state in which the wheel driving unit 1 is assembled to an automobile (a left side in FIG. 1), and the inner side in the axial direction is referred to as an inner side of the vehicle body in the widthwise direction in a state in which the wheel driving unit 1 is assembled to the automobile (a right side of FIG. 1).

### <Structure of hub unit bearing>

The hub unit bearing 2 includes the outer ring 4, the hub 5, and a plurality of rolling elements 6a and 6b.

The outer ring 4 has a hollow shape, and has a plurality of outer ring raceways 7a and 7b on an inner circumferential surface.

In an example, the plurality of outer ring raceways 7a and 7b are constituted by plural rows (two rows) of the outer ring raceways 7a and 7b.

Each of the outer ring raceways 7a and 7b has a generatrix shape according to a shape of the plurality of rolling elements 6a and 6b. When the plurality of rolling elements 6a and 6b are constituted by balls, each of the outer ring raceways 7a and 7b has a generatrix shape of a circular arc. When the plurality of rolling elements 6a and 6b are constituted by tapered rollers, the outer ring raceways 7a and 7b have a linear generatrix shape inclined with respect to the central axis of the outer ring 4.

In this example of FIG. 1, in the hub unit bearing 2, the plurality of rolling elements 6a and 6b are constituted by balls. For this reason, each of the outer ring raceways 7a and 7b has a generatrix shape of a circular arc.

The outer ring 4 has a stationary flange 8 provided on an intermediate portion in the axial direction and protruding outward in the radial direction. The stationary flange 8 has flange-side support holes 9 passing through in the axial direction at a plurality of places in a radial intermediate portion in the circumferential direction.

The outer ring 4 is supported and fixed with respect to the knuckle by inserting a support bolt (not shown) into one of the flange-side support hole 9 and the knuckle-side support hole provided in the knuckle of the suspension system and screwing the support bolt into the other support hole.

The hub 5 is disposed on an inner side of the outer ring 4 in the radial direction coaxially with the outer ring 4. The hub 5 has a plurality of inner ring raceways 10a and 10b on an outer circumferential surface.

In this example of FIG. 1, the plurality of inner ring raceways 10a and 10b are constituted by plurality rows (two rows) of the inner ring raceways 10a and 10b.

Each of the inner ring raceways 10a and 10b has a generatrix shape corresponding to a shape of the plurality of rolling elements 6a and 6b. When the plurality of rolling elements 6a and 6b are constituted by balls, each of the inner ring raceways 10a and 10b has a generatrix shape of a circular arc. When the plurality of rolling elements 6a and 6b are composed of tapered rollers, the inner ring raceways 10a and 10b have a linear generatrix shape inclined with respect to the central axis of the hub 5.

In this example of FIG. 1, in the hub unit bearing 2, the plurality of rolling elements 6a and 6b are constituted by balls. For this reason, each of the inner ring raceways 10a and 10b has a generatrix shape of a circular arc.

The hub 5 further has a center hole 11, and a hub-side face spline 12.

The center hole 11 is provided to pass through a center portion of the hub 5 in the axial direction.

The hub-side face spline 12 is provided on an end surface on the inner side of the hub 5 in the axial direction, and is constituted by recessed portions and protruding portions arranged alternately in the circumferential direction. Specifically, the hub-side face spline 12 is provided on an end surface on an inner side of a staked portion (crimped portion) 19 in the axial direction provided on an end portion on an inner side of a hub wheel 17 in the axial direction. **In** addition, the hub-side face spline 12 is configured by disposing a plurality of protruding portions (teeth) protruding inward in the axial direction at equal intervals in the circumferential direction. For example, the protruding portions (teeth) that constitute the hub-side face spline 12 are radially disposed. A cross-sectional shape (teeth surface shape) of the protruding portions (teeth) is set to an appropriate profile, such as a straight profile or an involute profile. The protruding portions (teeth) are provided extending in at least the radial direction. A recessed portion (groove) extending in at least the radial direction is provided between one protruding portion (tooth) and another protruding portion (tooth).

In this example of FIG. 1, the hub 5 has a rotating flange 13 that protrudes outward in the radial direction at the portion that protrudes axially outward from the outer ring 4, and the hub 5 also has a cylindrical pilot portion 14 at its outer end portion in the axial direction.

For example, the rotating flange 13 has attachment holes 15 provided in a radial intermediate portion at a plurality of places in the circumferential direction and passing through in the axial direction. Each of the attachment holes 15 is constituted by a press-fit hole or a screw hole.

When each of the attachment holes 15 is constituted by the press-fit hole, a stud is press-fitted into each of the attachment holes 15 from an inner side in the axial direction. The braking rotor such as a brake disc or the like, and the wheel of the wheel assembly, each have a center hole in a center portion thereof, through which the pilot portion 14 is inserted. In addition, studs are inserted into multiple through-holes provided in the circumferential direction of each radial intermediate portion. The stud is coupled and fixed to the rotating flange 13 by screwing a hub nut onto a tip portion of the stud.

When each of the attachment holes 15 is constituted by the screw hole, the braking rotor such as a brake disc or the like, and the wheel of the wheel assembly, each have a center hole in a center portion thereof, through which the pilot portion 14 is inserted. In addition, hub bolts inserted into multiple through-holes provided in the circumferential direction of each radial intermediate portion are coupled and fixed to the rotating flange 13 by screwing into the attachment hole 15 from an outer side in the axial direction.

The hub 5 includes an inner ring 16 and the hub wheel 17.

The inner ring 16 is formed of a hard metal such as bearing steel or the like in a cylindrical shape. In another example, the inner ring 16 is formed of another material. The inner ring 16 has, on its outer circumferential surface, at least the inner ring raceway 10b which is the innermost in the axial direction among the plurality of inner ring raceways 10a and 10b. In this example of FIG. 1, the inner ring 16 has, in the axial intermediate portion of its outer circumferential surface, the inner ring raceway 10b on the inner side in the axial direction among the plural rows of the inner ring raceways 10a and 10b.

In an example, the hub wheel 17 is formed of a hard metal such as medium carbon steel or the like. In another example, the hub wheel 17 is formed of another material. The hub wheel 17 has, on its outer circumferential surface, at least the inner ring raceway 10a which is the axially outermost of the plurality of inner ring raceways 10a and 10b, a fitting shaft portion 18 onto which the inner ring 16 is fitted, and the staked portion 19 which is provided on the inner end portion in the axial direction and presses against the inner end surface of the inner ring 16 in the axial direction.

In this example of FIG. 1, the hub wheel 17 has the inner ring raceway 10a on the outer side in the axial direction among the plural rows of the inner ring raceways 10a and 10b in the axial intermediate portion on the outer circumferential surface.

The fitting shaft portion 18 is provided at a portion located axially inward of the inner ring raceway 10a on the outer side in the axial direction, and has an outer circumferential surface in the shape of a cylindrical portion whose outer diameter does not substantially change with respect to the axial direction. The portion of the outer circumferential surface of the hub wheel 17 adjacent to the axially inner side of the inner ring raceway 10a on the outer side in the axial direction and the outer circumferential surface of the fitting shaft portion 18 are connected by a step surface 20 facing inward in the axial direction.

The staked portion 19 extends outward in the radial direction from an inner end portion of the fitting shaft portion 18 in the axial direction. The hub-side face spline 12 is provided on the inner end surface of the staked portion 19 in the axial direction.

In this example of FIG. 1, the hub wheel 17 has the rotating flange 13 at a portion located axially outward of the inner ring raceway 10a on the outer side in the axial direction. In addition, the hub wheel 17 has the pilot portion 14 on the outer end portion in the axial direction.

The inner ring 16 is fitted onto the fitting shaft portion 18 of the hub wheel 17 and is clamped on both sides in the axial direction between the step surface 20 of the hub wheel 17 and the staked portion 19. The hub 5 is formed by coupling the inner ring 16 and the hub wheel 17, and a preload is applied to the rolling elements 6a and 6b.

The plurality of rolling elements 6a and 6b are arranged between the plurality of outer ring raceways 7a and 7b and the plurality of inner ring raceways 10a and 10b in a rollable manner in each row, and are provided with a preload.

In this example, each of the rolling elements 6a and 6b is formed of a hard metal such as bearing steel or the like, or ceramics. In another example, the rolling elements 6a and 6b are formed of another material.

For example, each of the rolling elements 6a and 6b is constituted by a ball or a tapered roller. In this example of FIG. 1, each of the rolling elements 6a and 6b is constituted by a ball.

The rolling elements 6a and 6b are arranged at equal intervals in the circumferential direction using holders 21a and 21b having an annular shape.

In this example, the hub unit bearing 2 includes an equal diameter PCD type structure in which a pitch circle diameter of the rolling elements 6a of an outer row in the axial direction is equal to a pitch circle diameter of the rolling elements 6b of an inner row in the axial direction. In another example, the hub unit bearing 2 may include a different diameter PCD type structure in which a pitch circle diameter of the rolling elements of the outer row in the axial direction is greater or smaller than a pitch circle diameter of the rolling elements of the inner row in the axial direction.

### <Structure of constant velocity joint>

The constant velocity joint 3 includes a joint outer ring 22, a joint inner ring 23, and a plurality of balls 24.

The joint outer ring 22 has a joint-side face spline 25 on its outer side surface in the axial direction that engages with the hub-side face spline 12 of the hub 5.

The joint outer ring 22 has a substantially bowl-shaped (substantially dish-shaped) mouse portion 26, and a cylindrical portion 27.

The mouse portion 26 has a substantially cylindrical circumferential wall portion 28, and a substantially hollow sidewall portion 29 extending inward in the radial direction from an outer end portion of the circumferential wall portion 28 in the axial direction.

The inner circumferential surface of the circumferential wall portion 28 is constituted by a partially spherical concave surface. The circumferential wall portion 28 has outer diameter-side engagement grooves 30 provided on an inner circumferential surface at a plurality of places in the circumferential direction and extending in the axial direction.

The sidewall portion 29 has the joint-side face spline 25 obtained by alternately disposing the recessed portions and the protruding portions in circumferential direction on the radial intermediate portion of the outer side surface in the axial direction.

The cylindrical portion 27 extends outward in the axial direction from an inner end portion of the sidewall portion 29 in the radial direction. The cylindrical portion 27 has a female screw portion 31 on its inner circumferential surface.

The joint inner ring 23 has an outer circumferential surface with a partially convex spherical surface shape, and has inner diameter-side engagement grooves 32 extending in the axial direction at a plurality of places on the outer circumferential surface in the circumferential direction. In addition, the joint inner ring 23 has a spline hole 33 passing in the axial direction at its center portion. A spline shaft portion provided at a tip portion of a driving shaft (not shown) is spline-engaged with the spline hole 33.

Each of the balls 24 is positioned between the outer diameter-side engagement grooves 30 and the inner diameter-side engagement grooves 32, and is capable of rolling along the outer diameter-side engagement grooves 30 and the inner diameter-side engagement grooves 32.

The hub-side face spline 12 and the joint-side face spline 25 are engaged between the hub 5 of the hub unit bearing 2 and the joint outer ring 22 of the constant velocity joint 3. A shaft portion 35 of a bolt 34 inserted from the outer side in the axial direction into the center hole 11 is screwed into the female screw portion 31. The hub 5 is clamped on both sides in the axial direction between a head portion 36 of the bolt 34 and the joint outer ring 22, and the constant velocity joint 3 is coupled and fixed to the joint outer ring 22. Accordingly, the wheel driving unit 1 is configured.

### [Method of manufacturing hub unit bearing]

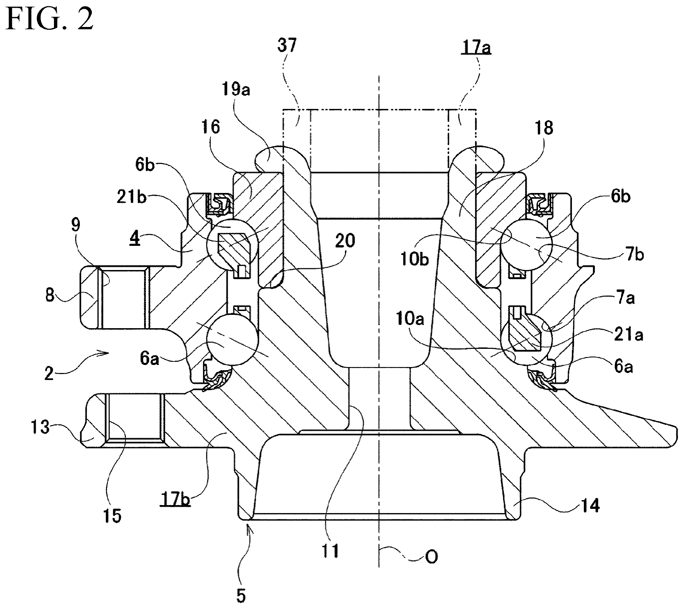

When the hub unit bearing (staked assembly) 2 is manufactured, as shown in FIG. 2, the outer ring 4 and the plurality of rolling elements 6a and 6b are disposed around the hub wheel 17a before forming the staked portion 19a. Further, the staked portion 19a is a staked portion before forming the hub-side face spline 12.

The hub wheel 17a before forming the staked portion 19a has a cylindrical portion 37 on an inner end portion in the axial direction adjacent to an inner side of the fitting shaft portion 18 in the axial direction. The cylindrical portion 37 has an outer diameter that is equal to the outer diameter of the fitting shaft portion 18 and that does not change with respect to the axial direction. That is, the outer circumferential surface of the fitting shaft portion 18 and the outer circumferential surface of the cylindrical portion 37 are constituted by a single cylindrical portion.

The procedure for arranging the outer ring 4 and the plurality of rolling elements 6a and 6b around the hub wheel 17a is not particularly limited, and arbitrary procedure can be used as long as no contradiction occurs.

For example, first, the plurality of rolling elements 6a and 6b are inserted into pockets of the two holders 21a and 21b, and each of the holders 21a and 21b holds the plurality of rolling elements 6a and 6b in rows. Next, the rolling elements 6a and 6b in each row are held by the two holders 21a and 21b and are held inside the radial direction of the outer ring raceways 7a and 7b of the outer ring 4. Next, the hub wheel 17a is inserted from the outer side in the axial direction into the inner side in the radial direction of the outer ring 4 and the plurality of rolling elements 6a and 6b and the holders 21a and 21b which are assembled together. After that, the inner ring 16 is fitted onto the fitting shaft portion 18 of the hub wheel 17a. In other words, the inner ring 16 is inserted between the rolling element 6b of the inner row in the axial direction and the fitting shaft portion 18. Then, the cylindrical portion 37 of the hub wheel 17a is plastically deformed outward in the radial direction to form the staked portion 19a, thereby joining the inner ring 16 to a hub wheel 17b before forming the hub-side face spline 12. The inner ring (second member) 16 is fixed to the hub wheel (first member) 17b in the axial direction by the staked portion 19a.

The method of forming the staked portion 19a is not particularly limited. For example, the staked portion 19a can also be formed by conventional forging pressing, in which a die is pressed against the cylindrical portion 37 all around. Alternatively, the staked portion 19a can also be formed by rotary forging, in which a supported die that allows rotation about a central axis inclined relative to a central axis O of the hub wheel 17a is pressed against the cylindrical portion 37 while rotating it about the central axis O of the hub wheel 17a.

After forming the staked portion 19a as described above, the hub-side face spline 12 is formed on an inner end surface of the staked portion 19a in the axial direction.

In the embodiment, a method of manufacturing a hub unit bearing (staked assembly) includes a process of preparing the hub wheel (first member, hub body) 17b having the staked portion 19a, a process of setting a pressing die 39 for a face spline, and a process of forming a face spline in the staked portion 19a of the hub wheel 17b using the pressing die 39. A central axis (rotation axis) α of the pressing die 39 is inclined with respect to a reference axis C.

Here, formation of the face spline includes a process of pressing the pressing die 39 against the staked portion 19a according to first relative movement between the pressing die 39 and the staked portion 19a, and a process of pressing the pressing die 39 against the staked portion 19a according to second relative movement between the pressing die 39 and the staked portion 19a. A partial processing position on the staked portion 19a in the first relative movement is moved around the reference axis C in the first circumferential direction. In the first relative movement, a contact position (contact portion) in the pressing die 39 with the staked portion 19a varies around the central axis α in a first direction. In the first relative movement, among the plurality of teeth in the pressing die 39, the positions of the teeth that sequentially engage with the staked portion 19a shift in the first circumferential direction. In the second relative movement, the partial processing position on the staked portion 19a moves around the reference axis C in a second circumferential direction opposite to the first circumferential direction. In the second relative movement, a contact position (contact portion) of the pressing die 39 with the staked portion 19a varies around the central axis α in a second direction. In the second relative movement, among the plurality of teeth in the pressing die 39, the positions of the teeth that sequentially engage with the staked portion 19a shift in the second circumferential direction. In one example, the pressing die 39 rotates around the central axis α in the first direction according to the first relative movement. The pressing die 39 rotates around the central axis α in the second direction opposite to the first direction according to the second relative movement.

In this example, in the first relative movement, a processing part 42 (processing position) of the pressing die 39 moves in a first circumferential direction around the reference axis C relative to the staked portion 19a. In the second relative movement, the processing part 42 (processing position) of the pressing die 39 moves in a second circumferential direction opposite to the first circumferential direction around the reference axis C relative to the staked portion 19a. For example, in the first relative movement, the staked portion 19a is fixed in a rotation direction about the reference axis C, and the processing part 42 (processing position) of the pressing die 39 is moved in the first circumferential direction about the reference axis C. In the second relative movement, the staked portion 19a is fixed in a rotation direction about the reference axis C, and the processing part 42 (processing position) of the pressing die 39 is moved in a second circumferential direction about the reference axis C. Alternatively, in the first relative movement, the processing part 42 (processing position) of the pressing die 39 is fixed in a circumferential direction about the reference axis C, and the staked portion 19a is rotated in a second circumferential direction about the reference axis C. In the second relative movement, the processing part 42 (processing position) of the pressing die 39 is fixed in a circumferential direction about the reference axis C, and the staked portion 19a is rotated in a first circumferential direction about the reference axis C. Alternatively, in each of the first relative movement and the second relative movement, the staked portion 19a and the processing part 42 (processing position) of the pressing die 39 are rotated or moved in opposite directions around the reference axis C, and the relative speeds in the first relative movement and the second relative movement are appropriately set, respectively. Alternatively, in each of the first relative movement and the second relative movement, the staked portion 19a and the processing part 42 of the pressing die 39 are rotated or moved in the same direction around the reference axis C, and the relative speeds in the first relative movement and the second relative movement are appropriately set, respectively.

In an example, formation of the face spline further includes a process of pressing the pressing die 39 against the staked portion 19a according to third relative movement between the pressing die 39 and the staked portion 19a. In the third relative movement, a partial processing position on the staked portion 19a moves in the first circumferential direction or the second circumferential direction around the reference axis C. In the third relative movement, a contact position (contact portion) of the pressing die 39 with the staked portion 19a varies in a third direction around the central axis α. In the third relative movement, among the plurality of teeth of the pressing die 39, the positions of the teeth that sequentially engage with the staked portion 19a shift in the third circumferential direction. The third direction is opposite to the first direction or the second direction. The third circumferential direction is opposite to the first circumferential direction or the second circumferential direction. In this example. the pressing die 39 rotates around the central axis α in the third direction according to the third relative movement. The movement of the pressing die 39 (the processing part 42) and the staked portion 19a in the third relative movement can be applied in various forms, similar to the first relative movement and the second relative movement described above.

In this example, a relative speed (set relative speed, average relative speed, maximum relative speed, and actual relative speed) between the pressing die 39 and the staked portion 19a in the third relative movement is different from at least one of a relative speed in the first relative movement and a relative speed in the second relative movement. For example, the relative speed in the first relative movement and the relative speed in the second relative movement are substantially the same (first relative speed), and the relative speed in the third relative movement (second relative speed) is smaller or larger than the first relative speed. Alternatively, the relative speed in the first relative movement is different from the relative speed in the second relative movement, and the relative speed in the second relative movement is different from the relative speed in the third relative movement. In addition, the relationship of the relative speeds can be applied in various forms.

In this example, the movement amount of the pressing die 39 with respect to the staked portion 19a in the third relative movement in the axial direction (an axial movement amount along the reference axis C) is different from at least one of an axial movement amount in the first relative movement and an axial movement amount in the second relative movement. For example, the axial movement amount in the first relative movement and the axial movement amount in the second relative movement are substantially the same (first axial movement amount), and the axial movement amount in the third relative movement (second axial movement amount) is smaller or larger than the first axial movement amount. Alternatively, the axial movement amount in the second relative movement is smaller than the axial movement amount in the first relative movement, and the axial movement amount in the third relative movement is further smaller than the axial movement amount in the second relative movement. In addition, the relationship of the axial movement amounts can be applied in various forms.

In this example, before the pressing with the third relative movement, the pressing with the first relative movement and the pressing with the second relative movement are executed once. For example, one pressing with the first relative movement is performed, one pressing with the second relative movement is performed, and then, one pressing with the third relative movement is performed. In another example, before the pressing with the third relative movement, the pressing with the first relative movement and the pressing with the second relative movement are performed multiple times. For example, before the pressing with the third relative movement, the pressing with the first relative movement and the pressing with the second relative movement are performed alternately multiple times. The number of times of the first relative movement and the number of times of the second relative movement may be the same or different.

In this example, the first relative movement and the second relative movement are performed in the rough forming stage of the formation of the face spline, and the third relative movement is performed in the finish forming stage of the formation of the face spline.

In this example, when the hub-side face spline 12 is formed, a face spline forming process is executed. The pressing die 39 has the processing part 42 obtained by alternately disposing recessed portions 54 and protruding portions (teeth) 55 in a circumferential direction about a rotation axis α thereof, and is supported for rotation about the central axis (rotation axis) α. In the face spline process, in a state in which the rotation axis α of the pressing die 39 is inclined at a predetermined angle θ with respect to the central axis O of the member to be processed (workpiece, the hub wheel 17b), a part of the processing part 42 is pressed against an annular part to be processed (the staked portion 19a) provided on the member to be processed (the hub wheel 17b) coaxially with the member to be processed, the pressing die 39 is rotated about the central axis O of the member to be processed (the hub wheel 17b), and the face spline (the hub-side face spline 12) is formed on the part to be processed (the staked portion 19a). The relative rotation direction of the pressing die 39 about the central axis O of the member to be processed (the hub wheel 17b) is reversed (a mode of relative movement is switched) at least once during the face spline forming process.

### <Structure of face spline forming apparatus>

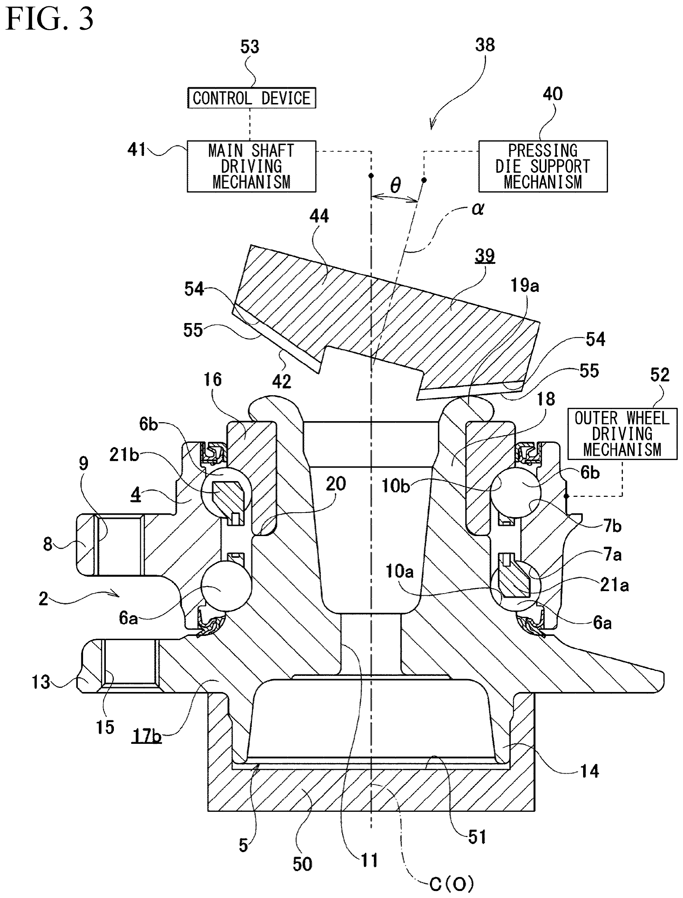

The face spline forming process can be performed using a face spline forming apparatus (an apparatus for manufacturing a staked assembly, or a part of the apparatus for manufacturing the staked assembly) 38 as shown in FIG. 3 to FIG. 5 and FIG. 7. The face spline forming apparatus 38 includes a support mechanism (first mechanism) 61 provided with a support stand 50, the pressing die 39 for a face spline, a pressing die support mechanism (second mechanism) 40, a main shaft driving mechanism (third mechanism) 41, and a control device 53.

The support mechanism 61 supports a hub wheel 37b (first member) having the staked portion 19a. The main shaft driving mechanism 41 presses the pressing die 39 against the staked portion 19a according to the relative movement between the pressing die 39 and the staked portion 19a. The control device 53 has a first mode of executing first relative movement between the pressing die 39 and the staked portion 19a, and a second mode of executing second relative movement between the pressing die 39 and the staked portion 19a. In this example, in the first mode, the pressing die 39 rotates around the central axis α in the first direction according to the first relative movement. In the second mode, the pressing die 39 rotates around the central axis α in the second direction opposite to the first direction according to the second relative movement.

The pressing die 39 is a member that is pressed against the staked portion 19a of the hub wheel 17b to form the hub-side face spline (face spline) 12 by plastically deforming the inner end surface of the staked portion 19a in the axial direction. The pressing die 39 is supported by the pressing die support mechanism 40 so that the pressing die 39 can rotate around the rotation axis α, which is the central axis of the pressing die 39, with the rotation axis α inclined at a predetermined angle θ with respect to the reference axis C. In this example, the predetermined angle θ may be 1, 2, 3, 4, 5, 6, 7, 8, 9, 10, 11, 12, 13, 14, 15, 16, 17, 18, 19, 20°, or more. For example, the predetermined angle θ may be 3° or more and 5° or less. For example, the inclined angle θ may be about 5°. The numerical values are examples and not limited thereto.

The reference axis C is an axis disposed coaxially with the hub wheel 17b that is a member to be processed. The hub unit bearing 2, including the hub wheel 17b which is a member to be processed, is set in the face spline forming apparatus 38 so that its central axis O coincides with the reference axis. An extension direction of the reference axis C is not particularly limited, and may be an arbitrary direction, such as a vertical direction (upward/downward direction), a horizontal direction, or the like. In this example, the reference axis C extends in the vertical direction. More specifically, the hub unit bearing 2, including the hub wheel 17b which is a member to be processed, is set in the face spline forming apparatus 38 with the inner side in the axial direction facing upward and the outer side in the axial direction facing downward.

The pressing die 39 has, at its tip portion (the lower end portion in FIG. 3 to FIG. 5), the processing part 42 which is configured by alternately disposing the recessed portions 54 and the protruding portions 55 in the circumferential direction about the rotation axis α.

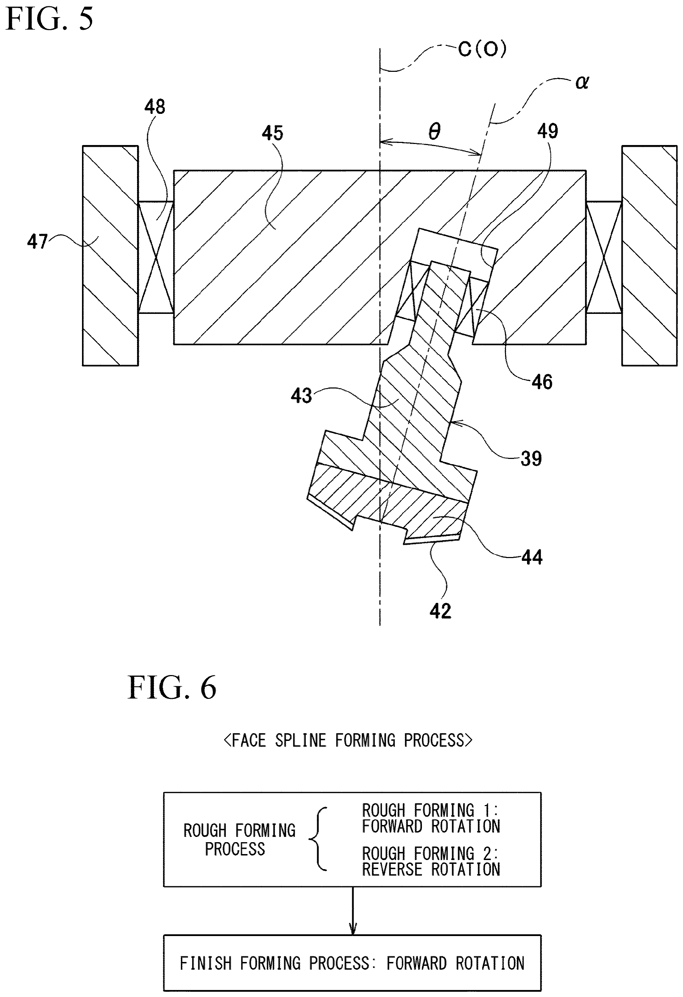

In this example, as shown in FIG. 5, the pressing die 39 includes a shaft member 43 and a pressing die body 44. The shaft member 43 has a stepped cylindrical shape. The pressing die body 44 is supported by and fixed to a tip portion (a lower end portion of FIG. 5) of the shaft member 43. The processing part 42 is provided on an end surface of the pressing die body 44 on a tip side.

The pressing die support mechanism 40 rotatably supports the pressing die 39 about the rotation axis α in a state in which the rotation axis α is inclined at a predetermined angle θ with respect to the reference axis C. For example, the pressing die support mechanism 40 includes a pressing die support block 45 and an inner bearing device 46.

The pressing die support block 45 is disposed coaxially with the reference axis C, and rotatably supported about the reference axis C. For example, the pressing die support block 45 has a cylindrical shape and is rotatably supported by an outer bearing device 48 relative to a frame 47 which does not rotate or move during operation of the face spline forming apparatus 38.

The pressing die support block 45 has a pressing die support recessed portion 49 formed in a direction inclined with respect to the reference axis C. The pressing die support recessed portion 49 has a cylindrical inner circumferential surface whose inner diameter does not change with respect to the axial direction of the pressing die support recessed portion 49. The inclined angle of the central axis of the pressing die support recessed portion 49 relative to the reference axis C is the same magnitude (θ) as the inclined angle of the rotation axis α of the pressing die 39 relative to the reference axis C.

The pressing die support recessed portion 49 opens on at least one of side surfaces on both axial sides of the pressing die support block 45 closest to the hub unit bearing 2, which includes a hub wheel (member to be processed) 17b set in the face spline forming apparatus 38. In this example, the pressing die support recessed portion 49 is constituted by a bottomed hole that opens only to the lower surface of the pressing die support block 45. In another example, the pressing die support recessed portion may be configured with through-holes opening on both sides of the pressing die support block in the axial direction.

The inner bearing device 46 is disposed between the pressing die 39 and the pressing die support recessed portion 49. Accordingly, the pressing die 39 is supported so as to be rotatable about the rotation axis α relative to the pressing die support block 45. In this example, the inner bearing device 46 is disposed between a base end portion (an upper end portion of FIG. 5) of the pressing die 39 and the pressing die support recessed portion 49.

The main shaft driving mechanism 41 is capable of rotating the pressing die support mechanism 40 about the reference axis C and of reversing the direction of rotation (switching the mode of relative movement).

Specifically, the main shaft driving mechanism 41 uses an electric motor as the driving source to rotate the pressing die support block 45 about the reference axis C. The electric motor rotates the pressing die support block 45 directly or via a speed reducer. The electric motor is configured to be capable of rotating in both forward and reverse directions, and its rotation direction can be switched based on commands from the control device 53.

The control device 53 controls the pressing die support mechanism 40 to rotate about the reference axis C using the main shaft driving mechanism 41, while reversing the direction of rotation at least once (switching the mode of relative movement once) during the process of forming a face spline on the part to be processed of the member to be processed by the processing part 42 of the pressing die 39.

The face spline forming apparatus 38 includes the support stand 50 (the support mechanism 61) which supports the hub unit bearing 2, including the hub wheel 17b which is a member to be processed, so as to enable relative movement (relative motion) in the axial direction of the reference axis C with respect to the pressing die 39.

The support stand 50 supports the hub unit bearing 2 with its central axis O aligned with the reference axis C, with the inner side in the axial direction facing upward and the outer side in the axial direction facing downward, without rattling in the radial direction. **In** this example, the support stand 50 has a recessed portion 51 that opens onto its upper surface. The hub unit bearing 2 is supported on the support stand 50 by fitting the pilot portion 14 of the hub 5 into the recessed portion 51 without rattling in the radial direction.

In this example, the support stand 50 is supported so as to be movable in the upward/downward direction, which is the axial direction of the reference axis C, relative to the frame 47, and can be moved in the upward/downward direction by a hydraulic mechanism. In another example, a support stand that supports the hub unit bearing can be configured to support it so as to prevent movement in the axial direction of the reference axis, and to move the pressing die in the axial direction of the reference axis by a hydraulic mechanism.

The face spline forming apparatus 38 of this example further includes an outer ring driving mechanism 52 configured to rotate the outer ring 4 of the hub unit bearing 2 with respect to the hub wheel 17b and the inner ring 16.

The outer ring driving mechanism 52 rotates the outer ring 4 using an electric motor as a driving source. The structure of the outer ring driving mechanism 52 is not particularly limited. For example, the outer ring driving mechanism 52 can be configured to rotate a jig supported by and fixed to the stationary flange 8 by the electric motor via a speed reducer.

### <Face spline forming method>

A specific method of forming the hub-side face spline 12 on the staked portion 19a using the face spline forming apparatus 38 of this example will be described with reference to FIG. 6, in addition to FIG. 3 to FIG. 5 and FIG. 7.

First, the hub wheel 17b is positioned so that the central axis O of the hub wheel 17b is coaxial with the reference axis C. **In** this example, by fitting the pilot portion 14 of the hub 5 into the recessed portion 51 without rattling in the radial direction, the hub unit bearing 2 is supported on the support stand 50 with its central axis O aligned with the reference axis C, the inner side in the axial direction facing upward, and the outer side in the axial direction facing downward, without rattling in the radial direction.

Next, in a state in which the pressing die 39 is inclined about the rotation axis α by a predetermined angle θ with respect to the reference axis C, a part of the processing part 42 (a part in the circumferential direction about the rotation axis α) is pressed onto the staked portion 19a while the pressing die 39 is rotated about the reference axis C to perform a face spline forming process in which the hub-side face spline 12 is formed on the staked portion 19a.

Specifically, by raising the support stand 50, a circumferential portion of the processing part 42 of the pressing die 39 is brought into contact with a circumferential portion of the staked portion 19a of the hub wheel 17b, as shown in FIG. 3. Then, while the support stand 50 applies an upward load to the hub unit bearing 2 to press the circumferential portion of the processing part 42 into the circumferential portion of the staked portion 19a, the main shaft driving mechanism 41 rotates the pressing die support block 45 of the pressing die support mechanism 40 about the reference axis C, thereby rotating the pressing die 39 about its center.

The pressing die 39 rotates (spins) about the rotation axis α based on frictional and/or mechanical engagement forces acting on the contact portion between the processing part 42 and the inner end portion of the staked portion 19a in the axial direction. Alternatively, at least a portion of the pressing die 39 on the rotation axis α moves in the circumferential direction around the reference axis C relative to the staked portion. Among the plurality of teeth of the pressing die 39, the positions of the teeth that sequentially engage with the staked portion 19a shift in the circumferential direction around the rotation axis α. Accordingly, the rotation axis α of the pressing die 39 swings around the reference axis C like a trajectory of the central axis due to precession. Accordingly, while applying a load to the circumferential portion of the staked portion 19a, the portion to which the load is applied is continuously changed in the circumferential direction, gradually plastically deforming the staked portion 19a, thereby forming the hub-side face spline 12 in the staked portion 19a. That is, the staked portion 19 on which the hub-side face spline 12 is formed is obtained.

In this example, in such a face spline forming process, the rotation direction of the pressing die 39 about the central axis O of the member to be processed (the hub wheel 17b), i.e., the rotation direction of the pressing die 39 about the reference axis C is reversed at least once during the process. Alternatively, the movement direction (rotation direction) of at least a portion of the pressing die 39 in the circumferential direction on the rotation axis α is reversed at least once during the process. The reversal switches the mode of relative movement.

In this example, the reversal in the rotation direction of the pressing die 39 about the reference axis C (mode switching) is achieved by reversing the rotation direction of the pressing die support block 45 using the main shaft driving mechanism 41 based on a control command from the control device 53.

In this example, the face spline forming process is divided into a rough forming process and a finish forming process following the rough forming process, as shown in FIG. 6.

In the rough forming process, the pressing die 39 is rotated about the reference axis C while being moved relative to the hub wheel 17b, which is a member to be processed, in the axial direction of the reference axis C. The rough shape of the hub-side face spline 12 is formed at the inner end portion of the staked portion 19a in the axial direction. For example, in the rough forming process, the amount of axial movement of the pressing die 39 relative to the hub wheel 17b (a movement amount along the reference axis C in the axial direction), which is the member to be processed, per rotation of the pressing die 39 about the reference axis C is constant.

In this example, in the finish forming process, the pressing die 39 is not moved in the axial direction relative to the hub wheel 17b, which is a member to be processed. In another example, the amount of movement along the reference axis C of the pressing die 39 in the finish forming process (a movement amount in the axial direction) is smaller than that in the rough forming process. For example, the amount of axial movement of the pressing die 39 in the finish forming process is 1/5, 1/6, 1/7, 1/8, 1/9, 1/10, 1/20, 1/30, 1/40, 1/50, or less, relative to the amount of axial movement in the rough forming process. The numerical values are merely examples and are not limited thereto. The pressing die 39 is rotated about the reference axis C to adjust the shape of the hub-side face spline 12 formed on the inner end portion of the staked portion 19 in the axial direction.

In this example, the rough forming process and the finish forming process are performed using the same face spline forming apparatus 38.

In this example, the rotation direction of the pressing die 39 about the reference axis C is reversed at least once during the rough forming process, but is not reversed during the finish forming process. In another example, reversal (mode change) is performed multiple times in the rough forming process, and reversal (mode change) is performed once or multiple times in the finish forming process. In this example, in the first mode (first relative movement) of the rough forming process, at least a portion of the pressing die 39 on the rotation axis α moves in a first circumferential direction around the reference axis C relative to the staked portion 19a. In addition, among the plurality of teeth of the pressing die 39, the positions of the teeth that sequentially engage with the staked portion 19a shift in the first circumferential direction, and the partial processing position on the staked portion 19a moves in the first circumferential direction around the reference axis C. In the second mode (second relative movement) of the rough forming process, at least a portion of the pressing die 39 on the rotation axis α moves in a second circumferential direction around the reference axis C relative to the staked portion. In addition, among the plurality of teeth of the pressing die 39, the positions of the teeth that sequentially engage with the staked portion 19a shift in the second circumferential direction, and the partial processing position on the staked portion 19a moves in the second circumferential direction around the reference axis C. In the third mode (third relative movement) of the finish forming process, at least a portion of the pressing die 39 on the rotation axis α moves in the first circumferential direction or the second circumferential direction around the reference axis C relative to the staked portion. In addition, among the plurality of teeth of the pressing die 39, the positions of the teeth that sequentially engage with the staked portion 19a shift in the first circumferential direction or the second circumferential direction, and the partial processing position on the staked portion 19a moves in the first circumferential direction or the second circumferential direction around the reference axis C.

In this example, the rotation direction of the pressing die 39 about the reference axis C is reversed once during the rough forming process. Specifically, in the rough forming process, the direction of rotation of the pressing die support block 45 by the main shaft driving mechanism 41 is initially set to a forward rotation direction (rough forming 1) and then switched to a reverse rotation direction (rough forming 2) midway.

Further, the forward rotation direction is referred to as one of the rotation directions, and the reverse rotation direction is referred to as the other rotation direction. For example, in FIG. 3 to FIG. 5, when the pressing die 39 is viewed from above, if the clockwise rotation direction is set to the forward rotation direction, the counterclockwise rotation direction becomes the reverse rotation direction, and if the counterclockwise rotation direction is set to the forward rotation direction, the clockwise rotation direction becomes the reverse rotation direction.

In another example, the rotation direction of the pressing die 39 about the reference axis C may be reversed two or more times during the rough forming process. In this case, for example, the rotation direction can also be reversed each time the pressing die 39 rotates about the reference axis C, i.e., rotation in the forward rotation direction (rough forming 1) and rotation in the reverse rotation direction (rough forming 2) can be alternated for one rotation each.

In the rough forming process, the number of rotations of the pressing die 39 about the reference axis C in the forward rotation direction and the number of rotations in the reverse rotation direction can be the same or different. In this example, in the rough forming process, the number of rotations of the pressing die 39 in the forward rotation direction is equal to the number of rotations of the pressing die 39 in the reverse rotation direction.

In this example, the rotational speed (rotation number) when rotating the pressing die 39 in the forward rotation direction can be made the same as the rotational speed when rotating the pressing die 39 in the reverse direction. For this reason, in this example, the time it takes to rotate the pressing die 39 in the forward rotation direction is the same as the time it takes to rotate the pressing die 39 in the reverse rotation direction. More specifically, in this example, the pressing die 39 is moved relative to the hub wheel 17b in the axial direction of the reference axis C at a predetermined speed while being rotated in the forward rotation direction for a predetermined time, and then, the pressing die 39 is moved relative to the hub wheel 17b in the axial direction of the reference axis C at the predetermined speed while being rotated in the reverse rotation direction for the predetermined time.

In the rough forming process, the rotational speed (relative speed) of the pressing die 39 about the reference axis C can be set arbitrarily according to the required specifications of the material and/or face spline of the member to be processed. For example, the rotational speed (relative speed) in the rough forming process may be 50 min⁻¹ or more and 500 min⁻¹ or less, and preferably 100 min⁻¹ or more and 300 min⁻¹ or less. The numerical values are merely examples and are not limited thereto.

In this example, in the finish forming process, the rotation direction of the pressing die 39 about the reference axis C is kept constant without reversal during the process. In the finish forming process, the rotation direction of the pressing die 39 about the reference axis C may be either the forward rotation direction or the reverse rotation direction. In this example, the rotation direction is set to the opposite direction to the final rotation direction in the rough forming process. That is, since the final rotation direction in the rough forming process is the reverse rotation direction, the rotation direction in the finish forming process is the forward rotation direction.

In the finish forming process, the rotational speed (relative speed) of the pressing die 39 about the reference axis C can be set arbitrarily according to the required specifications of the material and/or face spline of the member to be processed. For example, the rotational speed (relative speed) in the rough forming process may be 100 min⁻¹ or more and 400min⁻¹ or less, and preferably 150min⁻¹ or more and 250min⁻¹ or less. The numerical values are merely examples and are not limited thereto.

The timing to end the rough forming process and the timing to end the finish forming process can be determined by any arbitrary means. For example, the timing to end these processes can be determined based on the relationship between the amount of plastic deformation of the staked portion 19a, which has been determined in advance through experiments, the elapsed time from the start of processing, the current value of the electric motor that constitutes the main shaft driving mechanism 41, and the like. In this example, the timing of switching from the rough forming process to the finish forming process is determined based on detection results of a sensor (not shown). For example, based on the detection result of the load during processing (for example, the detection result of the load change) detected by the sensor (not shown), the timing of switching from the rough forming process to the finish forming process can be determined. In general, the load change is relatively large in the rough forming process, while the load change is relatively small in the finish forming process. In another example, the switching timing from the rough forming process to the finish forming process can be determined based on the detection result of the relative movement amount in the axial direction (axial movement amount along the reference axis C) for the staked portion 19a. In general, the amount of axial movement is relatively large in the rough forming process, and the amount of axial movement is relatively small in the finish forming process.

In this example, in formation of the face spline, while the pressing die 39 is being pressed against the hub wheel 17b (the staked portion 19a), the outer ring 4 can be rotated relative to the hub wheel 17b (the staked portion 19a). For example, in the face spline forming process, while the process of forming the hub-side face spline 12 by plastically deforming the staked portion 19a is being performed, the outer ring 4 is rotationally driven relative to the hub wheel 17b and the inner ring 16 by the outer ring driving mechanism 52. Accordingly, by rotating and revolving the rolling elements 6a and 6b and plastically deforming the staked portion 19a. the formation of indentations on the outer ring raceways 7a and 7b and the inner ring raceways 10a and 10b is prevented.

Here, in the face spline forming method, it is advantageous to reverse the rotation direction of the pressing die 39 about the reference axis C at least once during the face spline forming process in order to ensure the life of the pressing die 39.

That is, in the face spline forming process, when the hub-side face spline 12 is formed, in the two side surfaces of the protruding portions 55 in the circumferential direction that constitute the processing part 42, a stress concentration occurs in the base portion of the side surface that is forward in the rotation direction of the pressing die 39 about the reference axis C.

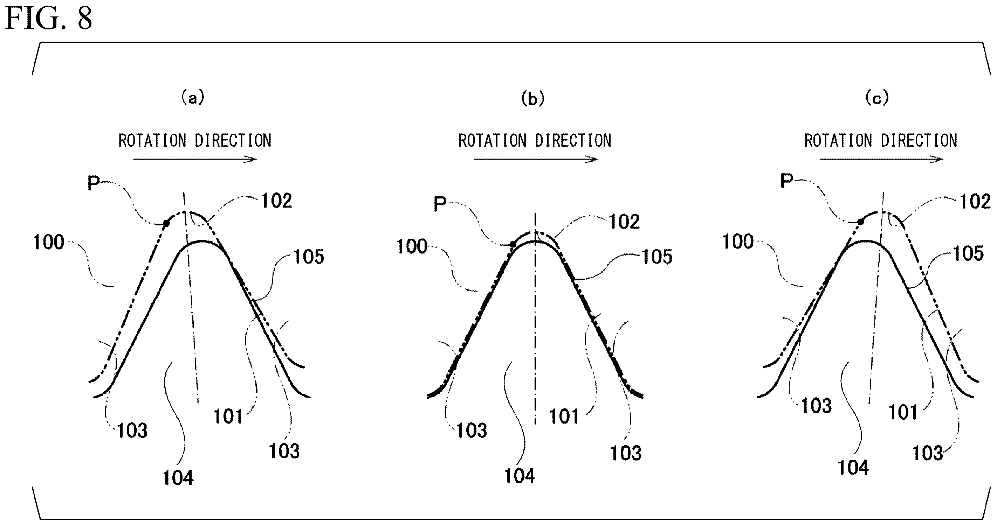

FIG. 8 shows a state in which a face spline is formed by a face spline forming method in the related art. As shown in FIG. 8, a processing part 101 of a pressing die 100 in the related art is configured by alternately disposing recessed portions 102 and protruding portions (teeth) 103 in the circumferential direction about the central axis (rotation axis) of the pressing die 100. When a hub-side face spline 105 is formed in an inner end surface of a staked portion 104 in the axial direction, due to the reaction force from the staked portion 104, a stress concentration occurs at a base portion P on the side surface of the pressing die 100 on a front side in the rotation direction about the reference axis, among both sides of the protruding portions 103 that constitute the processing part 101 of the pressing die 100 in the circumferential direction.

In addition, when the face spline 105 is formed, since the pressing die 100 is rotationally driven in only one direction about the reference axis, the stress concentration of the base portion P occurs every time the pressing die 100 rotates about the reference axis. That is, until the face spline 105 is completed, the number of times that stress concentration occurs in the base portion P increases, shortening the life of the pressing die 100 and increasing costs.

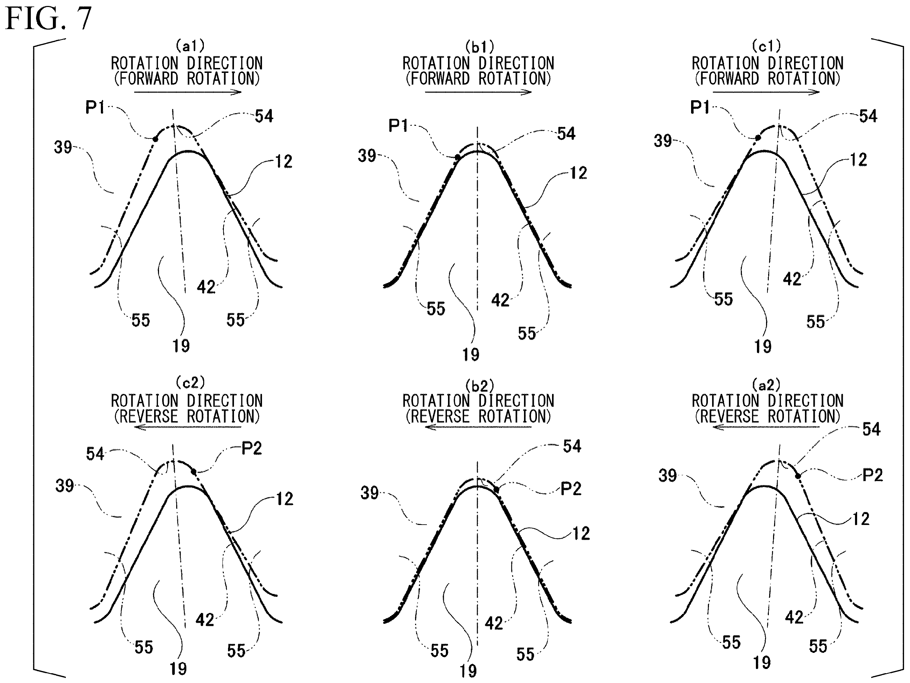

In this regard, FIG. 7 shows the formation of the face spline in the method according to the present invention. In FIG. 7, the stress concentration is attenuated by reversing the rotation direction of the pressing die 39 about the reference axis C (the direction of movement of the pressing die 39 to the processing position, or the shift direction of the position of the teeth of the pressing die 39 abutting against the workpiece) at least once during the face spline forming process. That is, the rotation direction of the pressing die 39 about the reference axis C can be either the forward rotation direction as shown in the order of (a1), (b1) and (c1) in FIG. 7, or the reverse rotation direction as shown in the order of (a2), (b2), and (c2) in FIG. 7. When the rotation direction of the pressing die 39 about the reference axis C is the forward rotation direction, stress concentration is likely to occur at the base portion P1 on the side surface on the front side in the forward rotation direction, among the both side surfaces of the protruding portions 55 in the circumferential direction. When the rotation direction of the pressing die 39 about the reference axis C is the reverse rotation direction, stress concentration is likely to occur at the base portion P2 on the side surface on the front side in the reverse rotation direction among the both side surfaces of the protruding portions 55 in the circumferential direction.

Accordingly, in contrast to the face spline forming method in the related art, the face spline forming process described above prevents the inconvenience of stress concentration occurring only at the base portion of one of the two side surfaces in the circumferential direction of the protruding portions 55 that constitute the processing part 42. For this reason, it is easier to ensure the life of the pressing die 39. This is advantageous for reducing manufacturing costs and/or improving product quality.

For example, in the face spline forming process described above, the face spline forming process is divided into a rough forming process and a finish forming process following the rough forming process, and in the rough forming process, the number of times the pressing die 39 rotates in the forward rotation direction is set to be substantially equal to the number of times it rotates in the reverse rotation direction. For this reason, it is easier to ensure the lifespan of the pressing die 39.

Further, in the face spline forming process, when reversing the rotation direction of the pressing die 39 about the reference axis C, the rotation of the pressing die 39 about the reference axis C must be stopped once. The more times the rotation direction of the pressing die 39 about the reference axis C is reversed, the longer the time required for the face spline forming process tends to become.

For this reason, in the rough forming process, by reversing the rotation direction of the pressing die 39 about the reference axis C only once, the time required for the face spline forming process can be shortened compared to when the rotation direction is reversed two or more times.

In this example, the reversal action (mode switching) always occurs at a predetermined circumferential position on the pressing die 39. For example, a reversal action takes place every period. In another example, multiple reversal actions (mode switching) are performed with different timing (circumferential positions). Concentration of reversal locations is avoided.

The face spline forming method of the present disclosure is not limited to the hub-side face spline 12 but can also be applied to formation of the joint-side face spline 25.

In this example, the face spline is formed on the staked portion of the hub unit bearing. In another example, a face spline is formed on a portion of the hub unit bearing different from the staked portion.

In this example, the face spline is formed on the hub unit bearing as a staked assembly. In another example, a face spline is formed on the staked assembly different from the hub unit bearing.

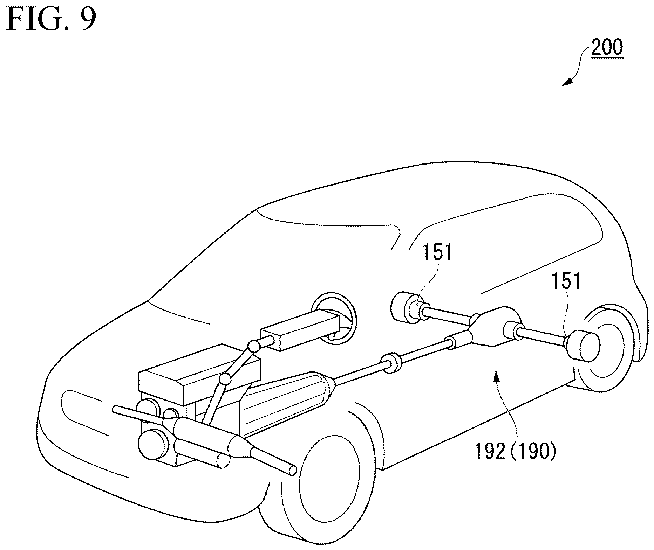

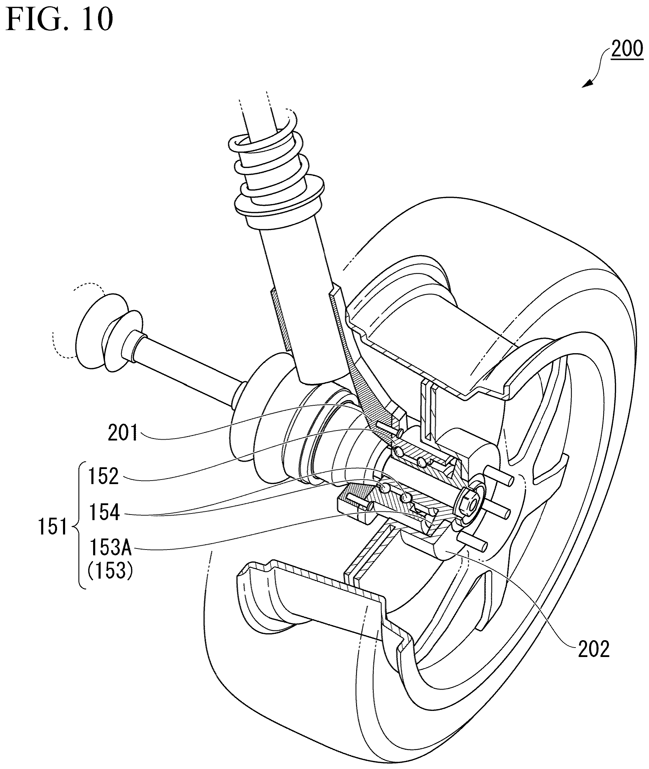

FIG. 9 and FIG. 10 are partial schematic views of a vehicle 200 including a hub unit bearing (bearing unit, bearing device) 151. The above-mentioned hub unit bearing (staked assembly) can be applied to both a hub unit bearing for a driving wheel and a hub unit bearings for a driven wheel. In FIG. 9, the hub unit bearing 151 is assembled to a chassis 192 of a vehicle body 190. In FIG. 10, the hub unit bearing 151 is for a driving wheel and includes an outer ring 152, a hub 153, and a plurality of rolling elements 156. The outer ring 152 is fixed to a knuckle 201 of the suspension system using a bolt or the like. A wheel 202 (and a braking rotor 22) is fixed to a flange (rotating flange) 153A provided on the hub 153 using a bolt or the like. In addition, the vehicle 200 may have a similar support structure as described above for the hub unit bearings 151 for a driven wheel.

The technical range of the present invention is not limited to the range disclosed in the embodiment. Various modifications or improvements can be made to the embodiment. Such modifications or improvements may also fall within the technical scope of the present invention. In addition, the present invention is not limited to the described embodiments, but may be any combination of these configurations.

The present disclosure includes the following configurations and/or combinations:
In an aspect, a method of manufacturing a staked assembly includes a process of preparing a first member having a staked portion and fixing a second member to the first member in an axial direction using the staked portion, a process of setting a pressing die for a face spline and disposing the pressing die by inclining a central axis thereof with respect to a reference axis, and a process of forming a face spline on the staked portion of the first member using the pressing die. Formation of the face spline includes a process of pressing the pressing die against the staked portion according to first relative movement between the pressing die and the staked portion such that, in the first relative movement, a partial processing position on the staked portion is moved in a first circumferential direction, and a process of pressing the pressing die against the staked portion according to second relative movement between the pressing die and the staked portion such that, in the second relative movement, a partial processing position on the staked portion is moved in a second circumferential direction opposite to the first circumferential direction.

The method of manufacturing the staked assembly according to the aspect further includes a process of pressing the pressing die against the staked portion according to third relative movement between the pressing die and the staked portion such that, in the third relative movement, a partial processing position on the staked portion in a third circumferential direction is moved. The third circumferential direction is opposite to the first circumferential direction or the second circumferential direction.

In the method of manufacturing the staked assembly according to the aspect, a relative speed in the third relative movement is different from at least one of a relative speed in the first relative movement and a relative speed in the second relative movement.

In the method of manufacturing the staked assembly according to the aspect, before the pressing according to the third relative movement, the pressing according to the first relative movement and the pressing according to the second relative movement are performed once or repeatedly multiple times.

In the method of manufacturing the staked assembly according to the aspect, the first relative movement and the second relative movement are performed in a rough forming stage of the face spline, and the third relative movement is performed by a finish forming stage of the face spline.

A method of manufacturing a mechanical device according to another aspect includes manufacturing the staked assembly using the method of manufacturing the staked assembly according to the aspect, and assembling the staked assembly to a device body.

A method of manufacturing a hub unit bearing according to another aspect includes a process of setting a pressing die for a face spline and disposing the pressing die by inclining a central axis thereof with respect to a reference axis, and a process of forming a face spline on a hub body, to which rolling elements and an outer ring are attached, using the pressing die. Formation of the face spline includes a process of pressing the pressing die against the hub body according to first relative movement between the pressing die and the hub body such that, in the first relative movement, a partial processing position on the hub body is moved in a first circumferential direction, and a process of pressing the pressing die against the hub body according to second relative movement between the pressing die and the hub body such that, in the second relative movement, a partial processing position on the hub body is moved in a second circumferential direction opposite to the first circumferential direction.

In the method of manufacturing the hub unit bearing according to the aspect, formation of the face spline includes rotating the outer ring relative to the hub body while the pressing die is pressed against the hub body.

A method of manufacturing a vehicle according to another aspect includes manufacturing a hub unit bearing using the method of manufacturing the hub unit bearing of the aspect, and assembling the hub unit bearing to a vehicle body. The vehicle includes the hub unit bearing.

An apparatus for manufacturing a staked assembly according to another aspect includes a first mechanism configured to support a first member having a staked portion with a second member fixed to the first member in an axial direction by the staked portion, a second mechanism configured to support a pressing die for a face spline with a central axis of the pressing die inclined with respect to a reference axis, a third mechanism configured to press the pressing die against the staked portion according to relative movement between the pressing die and the staked portion, and a control device. The control device has a first mode of executing first relative movement between the pressing die and the staked portion such that, in the first relative movement, a partial processing position on the staked portion is moved in a first circumferential direction, and a second mode of executing second relative movement between the pressing die and the staked portion such that, in the second relative movement, a partial processing position on the staked portion is moved in a second circumferential direction opposite to the first circumferential direction.

A mechanical device according to another aspect includes the staked assembly manufactured using the apparatus for manufacturing the staked assembly of the aspect, and a device body to which the staked assembly is assembled.

An apparatus for manufacturing a hub unit bearing according to another aspect includes a first mechanism configured to support a hub body to which rolling elements and an outer ring are attached, a second mechanism configured to support a pressing die for a face spline with a central axis of the pressing die inclined with respect to a reference axis, a third mechanism configured to pressing the pressing die against the hub body according to relative movement between the pressing die and the hub body, and a control device. The control device has a first mode of executing first relative movement between the pressing die and the hub body such that, in the first relative movement, a partial processing position on the hub body is moved in a first circumferential direction, and a second mode of executing second relative movement between the pressing die and the hub body such that, in the second relative movement, a partial processing position on the hub body is moved in a second circumferential direction opposite to the first circumferential direction.

A vehicle according to another aspect includes the hub unit bearing manufactured using the apparatus for manufacturing the hub unit bearing of the aspect, and a vehicle body to which the hub unit bearing is assembled.

A face spline forming method according to another aspect includes a face spline forming process of providing a pressing die having a rotation axis and a processing part configured by alternately disposing recessed portions and protruding portions in a circumferential direction about the rotation axis and rotatably supported about the rotation axis with the rotation axis inclined with respect to a central axis of a member to be processed by a predetermined angle, pressing a part of the processing part against an annular part to be processed provided on the member to be processed coaxially with the member to be processed, and rotating the pressing die about a central axis of the member to be processed, to form a face spline on the part to be processed. The rotation direction of the pressing die about the central axis of the member to be processed is reversed at least once during the face spline forming process.

In the face spline forming method according to the aspect, the face spline forming process includes a rough forming process, and a finish forming process following the rough forming process, and the rotation direction of the pressing die about the central axis of the member to be processed is reversed at least once during the rough forming process, and is not reversed during the finish forming process.

In the face spline forming method according to the aspect, the rotation direction of the pressing die about the central axis of the member to be processed is reversed just once during the rough forming process.

In the face spline forming method according to the aspect, in the rough forming process, the rotation direction of the pressing die about the central axis of the member to be processed is reversed each time the pressing die is rotated once about the central axis of the member to be processed.

In the face spline forming method according to the aspect, in the rough forming process, a rotational number in a forward rotation direction of the pressing die about the central axis of the member to be processed is equal to a rotational number in a reverse rotation direction of the pressing die about the central axis of the member to be processed.

In the method of manufacturing the hub unit bearing according to the other aspect, the hub-side face spline is formed by the face spline forming method of the aspect. The hub unit bearing includes an outer ring having a plurality of outer ring raceways on an inner circumferential surface, a hub having a plurality of inner ring raceways on an outer circumferential surface, and a plurality of rolling elements disposed in each row between the plurality of outer ring raceways and the plurality of inner ring raceways. The hub includes an inner ring having at least the innermost inner ring raceways in the axial direction of the plurality of inner ring raceways on its outer circumferential surface, a fitting shaft portion onto which the inner ring is fitted, a staked portion which presses down the inner end surface of the inner ring in the axial direction, and a hub wheel having a hub-side face spline on the inner end surface of the staked portion in the axial direction.

In the method of manufacturing the hub unit bearing according to the aspect, during the process of forming the hub-side face spline, the outer ring is rotationally driven relative to the hub wheel and the inner ring.

In another aspect, in the method of manufacturing the vehicle including the hub unit bearing, the hub unit bearing is manufactured by the method of manufacturing the hub unit bearing according to claim 6.

In another aspect, in the method of manufacturing the mechanical device, the face spline is formed by the face spline forming method of the aspect. The mechanical device includes a part having the face spline.

In another aspect, a face spline forming apparatus includes a pressing die having a rotation axis and a processing part configured by alternately disposing recessed portions and protruding portions in a circumferential direction about the rotation axis, a pressing die support mechanism configured to rotatably support the pressing die about the rotation axis in a state in which the rotation axis is inclined by a predetermined angle with respect to a reference axis, and a control device. The control device performs control of reversing the rotation direction at least once in the process, in the process of rotating the pressing die support mechanism about the reference axis, rotating a main shaft driving mechanism capable of reversing the rotation direction and the pressing die support mechanism about the reference axis using the main shaft driving mechanism, and pressing a part of the processing part of the pressing die against a part to be processed of the member to be processed to form a face spline.

### REFERENCE SIGNS LIST

1 Wheel driving unit
2 Hub unit bearing
3 Constant velocity joint
4 Outer ring
5 Hub
6a, 6b Rolling elements
7a, 7b Outer ring raceways
8 Stationary flange
9 Flange-side support hole
10a, 10b Inner ring raceways
11 Center hole
12 Hub-side face spline
13 Rotating flange
14 Pilot portion
15 Attachment hole
16 Inner ring
17, 17a, 17b Hub wheel
18 Fitting shaft portion
19, 19a Staked portion
20 Step surface
21a, 21b Holder
22 Joint outer ring
23 Joint inner ring
24 Balls
25 Joint-side face spline
26 Mouse portion
27 Cylindrical portion
28 Circumferential wall portion
29 Sidewall portion
30 Outer diameter-side engagement groove
31 Female screw portion
32 Inner diameter-side engagement groove
33 Spline hole
34 Bolt
35 Shaft portion
36 Head portion
37 Cylindrical portion
38 Face spline forming apparatus
39 Pressing die
40 Pressing die support mechanism
41 Main shaft driving mechanism
42 Processing part
43 Shaft member
44 Pressing die body
45 Pressing die support block
46 Inner bearing device
47 Frame
48 Outer bearing device
49 Pressing die support recessed portion
50 Support stand
51 Recessed portion
52 Outer ring driving mechanism
53 Control device
54 Recessed portion
55 Protruding portion
61 Support mechanism
100 Pressing die
101 Processing part
102 Recessed portion
103 Protruding portion
104 Staked portion
105 Hub-side face spline

## Claims

1. A method of manufacturing a staked assembly comprising:
preparing a first member having a staked portion and fixing a second member to the first member in an axial direction using the staked portion;
setting a pressing die for a face spline and disposing the pressing die by inclining a central axis thereof with respect to a reference axis, and
forming a face spline on the staked portion of the first member using the pressing die,
wherein the forming of the face spline comprises:
pressing the pressing die against the staked portion according to first relative movement between the pressing die and the staked portion such that, in the first relative movement, a partial processing position on the staked portion is moved in a first circumferential direction; and
pressing the pressing die against the staked portion according to second relative movement between the pressing die and the staked portion such that, in the second relative movement, a partial processing position on the staked portion is moved in a second circumferential direction opposite to the first circumferential direction.

2. The method of manufacturing the staked assembly according to claim 1, further comprising pressing the pressing die against the staked portion according to third relative movement between the pressing die and the staked portion such that, in the third relative movement, a partial processing position on the staked portion is moved in a third circumferential direction,
wherein the third circumferential direction is opposite to the first circumferential direction or the second circumferential direction.

3. The method of manufacturing the staked assembly according to claim 2, wherein a relative speed in the third relative movement is different from at least one of a relative speed in the first relative movement and a relative speed in the second relative movement.

4. The method of manufacturing the staked assembly according to claim 2 or 3, wherein, before the pressing according to the third relative movement, the pressing according to the first relative movement and the pressing according to the second relative movement are performed once or repeatedly multiple times.

5. The method of manufacturing the staked assembly according to any one of claims 2 to 4, wherein the first relative movement and the second relative movement are performed in a rough forming stage of the face spline, and
the third relative movement is performed by a finish forming stage of the face spline.

6. A method of manufacturing a mechanical device comprising:
manufacturing the staked assembly using the method according to any one of claims 1 to 5; and
assembling the staked assembly to a device body.

7. A method of manufacturing a hub unit bearing comprising:
setting a pressing die for a face spline and disposing the pressing die by inclining a central axis thereof with respect to a reference axis; and
forming a face spline on a hub body, to which rolling elements and an outer ring are attached, using the pressing die,
wherein the forming of the face spline comprises:
pressing the pressing die against the hub body according to first relative movement between the pressing die and the hub body such that, in the first relative movement, a partial processing position on the hub body is moved in a first circumferential direction; and
pressing the pressing die against the hub body according to second relative movement between the pressing die and the hub body such that, in the second relative movement, a partial processing position on the hub body is moved in a second circumferential direction opposite to the first circumferential direction.

8. The method of manufacturing the hub unit bearing according to claim 7, wherein the forming of the face spline comprises rotating the outer ring relative to the hub body while the pressing die is pressed against the hub body.

9. A method of manufacturing a vehicle comprising a hub unit bearing, the method comprising:
manufacturing the hub unit bearing according to claim 7 or 8; and
assembling the hub unit bearing to a vehicle body.

10. An apparatus for manufacturing a staked assembly, the apparatus comprising:
a first mechanism configured to support a first member having a staked portion with a second member fixed to the first member in an axial direction by the staked portion;
a second mechanism configured to support a pressing die for a face spline with a central axis of the pressing die inclined with respect to a reference axis;
a third mechanism configured to press the pressing die against the staked portion according to relative movement between the pressing die and the staked portion; and
a control device,
wherein the control device comprises
a first mode of executing first relative movement between the pressing die and the staked portion such that, in the first relative movement, a partial processing position on the staked portion is moved in a first circumferential direction; and
a second mode of executing second relative movement between the pressing die and the staked portion such that, in the second relative movement, a partial processing position on the staked portion is moved in a second circumferential direction opposite to the first circumferential direction.

11. A mechanical device comprising:
the staked assembly manufactured using the apparatus according to claim 10; and
a device body to which the staked assembly is assembled.

12. An apparatus for manufacturing a hub unit bearing, the apparatus comprising:
a first mechanism configured to support a hub body to which rolling elements and an outer ring are attached;
a second mechanism configured to support a pressing die for a face spline with a central axis of the pressing die inclined with respect to a reference axis;
a third mechanism configured to pressing the pressing die against the hub body according to relative movement between the pressing die and the hub body; and
a control device
wherein the control device comprises:
a first mode of executing first relative movement between the pressing die and the hub body such that, in the first relative movement. a partial processing position on the hub body is moved in a first circumferential direction; and
a second mode of executing second relative movement between the pressing die and the hub body such that, in the second relative movement, a partial processing position on the hub body is moved in a second circumferential direction opposite to the first circumferential direction.

13. A vehicle comprising:
the hub unit bearing manufactured using the apparatus according to claim 12; and
a vehicle body to which the hub unit bearing is assembled.
